# EUROPÄISCHE PATENTSCHRIFT

(11) **EP 3 976 932 B1**
(45) Veröffentlichungstag und Bekanntmachung des Hinweises auf die Patenterteilung: **21.02.2024**
(21) Anmeldenummer: 20736246.8
(22) Anmeldetag: 18.05.2020
(51) Int. Cl.: F01D 5/30

(54) **LAUFSCHAUFEL MIT SCHAUFELFUSSKONTUR MIT IN EINEM KONKAVEN KONTURABSCHNITT VORGESEHENEM GERADENABSCHNITT**
ROTOR BLADE WITH BLADE ROOT CONTOUR HAVING A STRAIGHT PORTION PROVIDED IN A CONCAVE CONTOUR PORTION
AUBE MOBILE COMPORTANT UN PROFIL D'IMPLANTURE D'AUBE POSSÉDANT UNE PARTIE DROITE PRÉVUE DANS UNE PARTIE DE PROFIL CONCAVE

(30) Priorität: 24.05.2019 DE 102019207620
(43) Veröffentlichungstag der Anmeldung: 06.04.2022
(73) Patentinhaber: MTU Aero Engines AG, 80995 München (DE)
(72) Erfinder: PERNLEITNER, Martin, 80995 München (DE); FRENO, Dieter, 80995 München (DE); WITTIG, Klaus, 80995 München (DE); EICHLER, Christian, 80995 München (DE); FRIEDRICH, Lutz, 81375 München (DE); LINHARD, Johannes, 80995 München (DE)
(86) Internationale Anmeldenummer: PCT/DE2020/000097
(87) Internationale Veröffentlichungsnummer: WO 2020/239151

(56) Entgegenhaltungen:
- WO-A1-2017/209752
- DE-A1-102008 002 942
- US-A- 5 480 285
- US-A1- 2007 237 644

## Beschreibung

Die vorliegende Erfindung betrifft eine Laufschaufel für eine Gasturbine, insbesondere Fluggasturbine, mit einem Schaufelabschnitt und mit einem Schaufelfuß, der mit dem Schaufelabschnitt verbunden ist, wobei der Schaufelfuß bezogen auf eine Querschnittsansicht eine linke und eine rechte Schaufelfußkontur aufweist, wobei die Schaufelfußkontur ausgehend von einem unteren Ende des Schaufelfußes wenigstens zwei konvexe Konturabschnitte und wenigstens zwei konkave Konturabschnitte aufweist, wobei ausgehend von dem unteren Ende entlang der Schaufelfußkontur zwischen einem konvexen Konturabschnitt und einem sich daran anschließenden konkaven Konturabschnitt ein Konturabschnitt als im Betrieb tragender Flankenabschnitt vorgesehen ist, und wobei ausgehend von dem unteren Ende entlang der Schaufelfußkontur zwischen einem konkaven Konturabschnitt und einem sich daran anschließenden konvexen Konturabschnitt ein Konturabschnitt als im Betrieb nicht tragender Flankenabschnitt vorgesehen ist.

Derartige Laufschaufeln sind beispielsweise aus der DE 10 2008 002942 A1 bekannt und deren Laufschaufelfuß bzw. die Schaufelfußkontur wird auch als Tannenbaum-Kontur bezeichnet. In einem eingebauten Zustand einer solchen Laufschaufel in einer Laufschaufelscheibe befindet sich das untere Ende des Schaufelfußes radial innen und die Konturabschnitte schließen sich von radial innen nach radial außen aneinander an. Die Symmetrieachse entspricht dabei der Radialrichtung.

Richtungsangaben wie "Axial-" bzw. "axial", "Radial-" bzw. "radial" und "Umfangs-" sind grundsätzlich auf die Maschinenachse der Gasturbine bezogen zu verstehen, sofern sich aus dem Kontext nicht explizit oder implizit etwas anderes ergibt.

Im Betrieb treten im Schaufelfuß, insbesondere in den konkaven Konturabschnitten hohe Spannungen auf. Ebenso können auch in den konkaven Scheibenkonturabschnitten, die zu den konvexen Konturabschnitt der zugehörigen Laufschaufeln komplementär sind, hohe Spannungen auftreten.

Die der Erfindung zugrunde liegende Aufgabe wird darin gesehen, eine Laufschaufel und eine Laufschaufelscheibe anzugeben, bei der die auftretenden Spannungen im Betrieb reduziert werden können.

Zur Lösung dieser Aufgabe wird eine Laufschaufel mit den Merkmalen des Anspruchs 1, eine Laufschaufelscheibe mit den Merkmalen des Anspruchs 6 und eine Gasturbine mit einer solchen Laufschaufelscheibe angegeben.

Vorgeschlagen wird also eine Laufschaufel für eine Gasturbine, insbesondere Fluggasturbine, mit den Merkmalen des Anspruchs 1.

Das Vorsehen eines solchen zwischen zwei konvex gebogenen Bogenabschnitten liegenden Geradenabschnitts führt zu einer messbaren Reduktion der im Betrieb auftretenden Spannungen. Es konnte insbesondere gefunden werden, dass die Spannung im sogenannten Kerbgrund des konkaven Konturabschnitts um bis zu 10% verringert werden konnten verglichen mit einem konkaven Konturabschnitt, der nur aus einem Bogenabschnitt oder aus mehreren unmittelbar aufeinander folgenden Bogenabschnitten mit unterschiedlichen Radien gebildet ist.

Der Übergang vom ersten Bogenabschnitt und/oder vom zweiten Bogenabschnitt zum Geradenabschnitt ist erfindungsgemäß ein krümmungsstetiger Übergang. Dies ist spannungstechnisch besonders vorteilhaft, jedoch herstellungstechnisch mit dem üblichen Räumverfahren vergleichsweise aufwändig, weil die Anfertigung spezieller Räumwerkzeuge erforderlich ist. Solche Übergänge können jedoch vergleichsweise einfach mittels ECM (electrochemical machining) und/oder Drahterodieren (WEDM, wire electro discharge machining) realisiert werden.

Damit die Spannungen optimal verteilt werden können kann der erste Bogenabschnitt einen größeren ersten Radius aufweisen als der zweite Bogenabschnitt. Ausgehend von dem unteren Ende des Schaufelfußes sind entlang der Schaufelfußkontur der erste Bogenabschnitt, der Geradenabschnitt und der zweite Bogenabschnitt nacheinander angeordnet.

Der Geradenabschnitt kann eine radiale Länge bis etwa 20 Millimeter, vorzugsweise 0,1 bis 1 Millimeter aufweisen.

Der auf den Geradenabschnitt des betreffenden konkaven Konturabschnitts folgende, nicht tragende Flankenabschnitt kann geneigt sein, insbesondere in einem Winkel von bis zu 30° bezogen auf eine zur Radialrichtung und Axialrichtung orthogonalen Tangente zur Umfangsrichtung. Dabei ist zu berücksichtigen, dass die Neigung des nicht tragenden Flankenabschnitts bei ansonsten gleich bleibenden Radien des ersten und zweiten Bogenabschnitts abhängig von der Länge des Geradenabschnitts ist.

Der Geradenabschnitt kann ausgehend von dem unteren Ende des Schaufelfußes in dem ersten konkaven Konturabschnitt vorgesehen sein. Entsprechend werden die im Betrieb wirkenden Spannungen insbesondere in dem radial inneren Teil des Schaufelfußes reduziert, der in Umfangsrichtung die geringste Ausdehnung aufweist, aufgrund der beiden sich symmetrisch gegenüberliegenden konkaven Konturabschnitte.

Zur Lösung der obigen Aufgabe wird weiter eine Laufschaufelscheibe, insbesondere mit mehreren Schaufelfußaufnahmen vorgeschlagen, mit den Merkmalen des Anspruchs 6.

Gemäß einer Ausführung umfasst die Laufschaufelscheibe konkave Scheibenkonturabschnitte, die jeweils zu einem konvexen Konturabschnitt einer Schaufelfußkontur der zugehörigen Laufschaufel, die eine erfindungsgemäße oder eine andere Laufschaufel sein kann, komplementär sind, wobei wenigstens einer der konkaven Scheibenkonturabschnitte einen ersten Scheibenbogenabschnitt, einen zweiten Scheibenbogenabschnitt und einen zwischen den beiden Scheibenbogenabschnitten angeordneten Scheibengeradenabschnitt aufweist.

Der Übergang vom ersten Scheibenbogenabschnitt und/oder vom zweiten Scheibenbogenabschnitt zum Scheibengeradenabschnitt ist erfindungsgemäß ein krümmungsstetiger Übergang.

Der erste Scheibenbogenabschnitt weist ferner erfindungsgemäß einen größeren ersten Radius als der zweite Scheibenbogenabschnitt. Zusätzlich oder alternativ weist der Scheibengeradenabschnitt erfindungsgemäß eine radiale Länge bis etwa 20 Millimeter, vorzugsweise 0,1 bis 1 Millimeter auf.

Dabei können ein im Betrieb freier Flankenabschnitt der Schaufelfußaufnahme und der in Radialrichtung oberhalb von diesem freien Flankenabschnitt angeordnete nicht tragende Flankenabschnitt des Schaufelfußes einen Winkel von bis zu 20° einschließen. Auch dieser Winkel ist durch die Wahl der Länge des Geradenabschnitts beeinflussbar bzw. von dieser Wahl abhängig.

Schließlich wird zur Lösung der gestellten Aufgabe auch eine Gasturbine, insbesondere Fluggasturbine vorgeschlagen mit einer derartigen Laufschaufelscheibe bzw. mit mehreren derartigen Laufschaufeln.

Nachfolgend wird die Erfindung unter Bezugnahme auf die anliegenden Figuren beispielhaft und nicht einschränkend beschrieben.
Fig. 1 zeigt in einer vereinfachten und schematischen Perspektivdarstellung eine Laufschaufel mit ihrem Laufschaufelfuß.
Fig. 2 zeigt in einer vereinfachten und schematischen Schnittdarstellung den Schaufelfuß mit seiner Schaufelfußkontur aufgenommen in eine Schaufelfußaufnahme einer Laufschaufelscheibe.
Fig. 3 zeigt eine Vergrößerung des in Fig. 2 gestrichelt umrandeten Bereichs III.

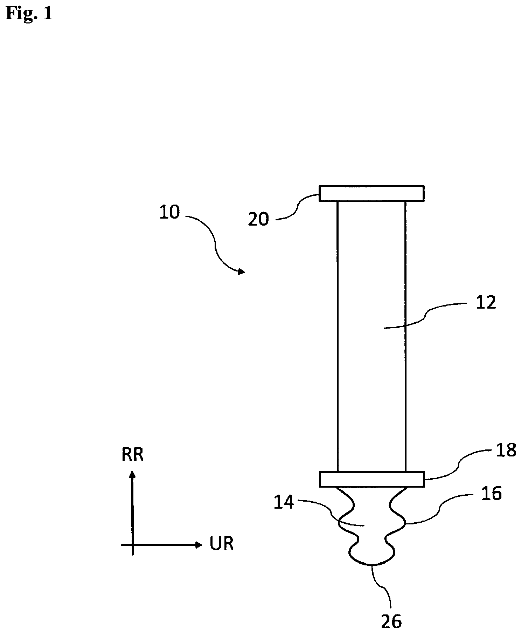

Fig. 1 zeigt in einer vereinfachten und schematischen Perspektivdarstellung eine Laufschaufel 10 für eine Gasturbine, insbesondere für eine Fluggasturbine oder für ein Flugzeugtriebwerk. Die Laufschaufel 10 umfasst einen Schaufelabschnitt 12. Als Schaufelabschnitt 12 wird derjenige Teil der Laufschaufel bezeichnet, der im Betrieb von Fluid, insbesondere Heißgas, umströmt wird.

Die Laufschaufel 10 weist unterhalb bzw. radial innen einen Schaufelfuß 14 auf. Der Schaufelfuß 14 weist bezogen auf eine radiale Symmetrieachse symmetrisch ausgebildete Schaufelfußkonturen 16 auf, die in Umfangsrichtung auf beiden Seiten des Schaufelfußes 14 ausgebildet sind. Zwischen dem Schaufelfuß 14 und dem Schaufelabschnitt 12 ist in üblicher Weise ein radial inneres Deckband 18 angeordnet. Ferner umfasst die Laufschaufel 10 auch ein radial äußeres Deckband 20.

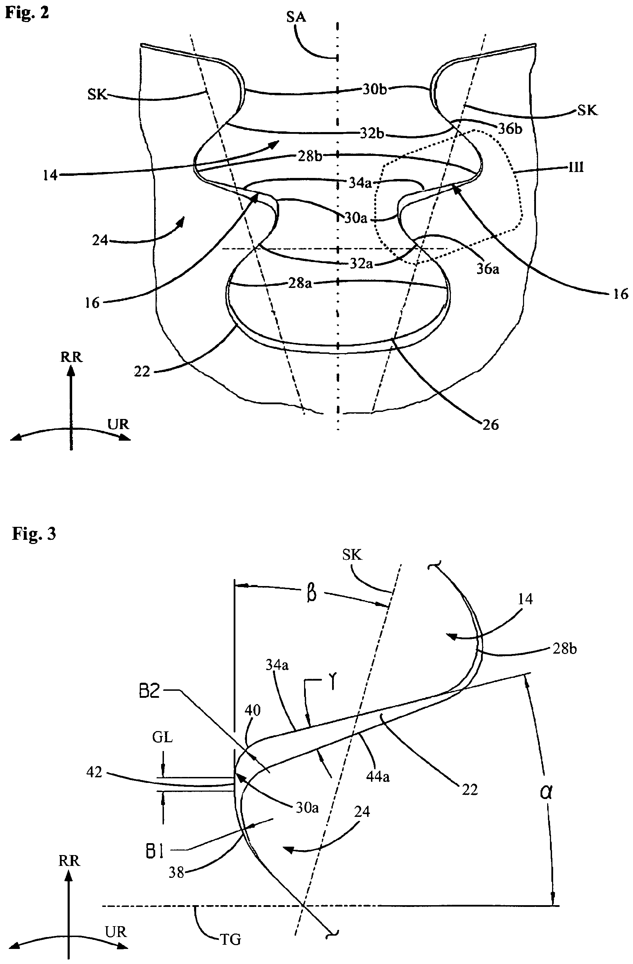

Fig. 2 zeigt den Schaufelfuß 14 mit seiner Schaufelfußkontur 16 in einer vereinfachten Schnittdarstellung. Der Schaufelfuß 14 ist in dieser Darstellung in einer Schaufelfußaufnahme 22 einer lediglich angedeuteten Laufschaufelscheibe 24 aufgenommen. In Fig. 2 ist die Radialrichtung RR verlaufende Symmetrieachse SA des Schaufelfußes 14 dargestellt. Der Schaufelfuß 16 weist auf jeder Seite der Symmetrieachse SA eine jeweilige linke bzw. rechte Schaufelfußkontur 16 auf. Die Schaufelfußkontur 16 verläuft ausgehend von einem unteren bzw. radial inneren Ende 26 des Schaufelfußes 14 nach radial außen. Auch wenn der Schaufelfuß 14 in diesem Beispiel symmetrische Schaufelfußkonturen 16 aufweist, stellt dies keine zwingende Einschränkung dar. Die linke Schaufelfußkontur und die rechte Schaufelfußkontur können auch nicht symmetrisch zueinander ausgebildet sein, beispielsweise aufgrund unterschiedlicher Radien der konvexen/konkaven Flankenabschnitte.

Die Schaufelfußkontur 16 umfasst zwei konvexe Konturabschnitte 28a, 28b und zwei konkave Konturabschnitte 30a, 30b. Zwischen dem konvexen Konturabschnitt 28a und dem konkaven Konturabschnitt 30a ist ein tragender Flankenabschnitt 32a als hier beispielsweise gerader Abschnitt ausgebildet. Ein weiterer tragender Flankenabschnitt 32b ist zwischen dem konvexen Konturabschnitt 28b und dem konkaven Konturabschnitt 30b ausgebildet. Zwischen dem konkaven Konturabschnitt 30a und dem konvexen Konturabschnitt 28b ist ein nicht tragender Flankenabschnitt 34a ausgebildet. Die Bezeichnung tragend bzw. nicht tragend bezieht sich dabei auf den Fall des Betriebs einer Gasturbine. Im Betrieb der Gasturbine wird die Laufschaufel 10 bzw. der Laufschaufelfuß 14 aufgrund der wirkenden Fliehkräfte nach radial außen bewegt. Entsprechend kommen die tragenden Flankenabschnitte 32a, 32b in Kontakt mit entsprechenden tragenden Gegenabschnitten 36a, 36b, die in der Schaufelfußaufnahme 22 der Laufschaufelscheibe 24 ausgebildet sind. Dieser Betriebszustand ist im Übrigen auch in den Fig. 2 und 3 dargestellt.

Um im Betrieb die auf den Schaufelfuß wirkenden Spannungen zu verringern weist der konkave Konturabschnitt 30a einen ersten Bogenabschnitt 38 und einen zweiten Bogenabschnitt 40 auf. Zwischen den beiden Bogenabschnitten 38, 40 ist ein Geradenabschnitt 42 ausgebildet. Der Geradenabschnitt 42 weist eine in der Fig. 3 mit GL bezeichnete Länge auf. Diese Länge GL beträgt insbesondere bis 20 Millimeter, vorzugsweise 0,1 bis 1 Millimeter. Der erste Bogenabschnitt 38 weist einen Radius B1 auf und der zweite Bogenabschnitt 40 weist einen Radius B2 auf. Dabei ist der Radius B1 größer als der Radius B2. Der Geradenabschnitt 42 verbindet die beiden Bogenabschnitte 38, 40 im Wesentlichen parallel zur Radialrichtung RR.

Der nicht tragende Flankenabschnitt 34a ist geneigt angeordnet und schließt mit einer Tangente TG zur Umfangsrichtung UR einen Winkel α von bis zu 30° ein. Ferner ist zwischen dem nicht tragenden Flankenabschnitt 34a und einem nicht tragenden Gegenabschnitt 44a der Schaufelfußaufnahme 22 ein Winkel γ von bis zu 20° gebildet. Ein Winkel β, der zwischen einer sogenannten Skelettlinie SK und dem Geradenabschnitt 42 gebildet wird, beträgt etwa 0° bis 20°, vorzugsweise etwa 12° bis 18°.

Die Länge GL des Geradenabschnitts 42 kann insbesondere so gewählt werden, dass die oben genannten Winkel und nicht größer werden als die bereits erwähnten Werte. Der Winkel kann dabei von 0° bis 30° betragen. Die Länge GL des Geradenabschnitts 42 hat somit einen Einfluss auf die Neigung des nicht tragenden Flankenabschnitts 34a. Insbesondere wir die Neigung bzw. der Winkel kleiner, wenn die Länge GL größer gewählt wird.

Durch das Vorsehen der Geradenabschnitte 42 können Spannungen insbesondere in einem radial inneren Bereich des Schaufelfußes 14 verringert werden, in dem der Schaufelfuß 14 zwischen den konkaven Konturabschnitten 28a eine minimale Ausdehnung in Umfangsrichtung UR aufweist. Somit kann dem Verschleiß bzw. der Materialermüdung in diesem radial inneren Bereich des Schaufelfußes 14 besser entgegengewirkt werden.

Die vorliegende Erfindung umfasst auch eine Laufschaufelscheibe, die in ähnlicher Weise wie die erfindungsgemäße Laufschaufel einen zur Spannungsreduktion in der Laufschaufelscheibe geeigneten Scheibengeradenabschnitt (nicht in den Zeichnungen dargestellt) aufweist, die jedoch nicht im Detail anhand von Zeichnungen dargestellt ist.

### Bezugszeichenliste

- 10: Laufschaufel
- 12: Schaufel abschnitt
- 14: Schaufelfuß
- 16: Schaufelfußkontur
- 18: inneres Deckband
- 20: äußeres Deckband
- 22: Schaufelfußaufnahme
- 24: Laufschaufelscheibe
- 26: unteres Ende
- 28a,b: konvexer Konturabschnitt
- 30a,b: konkaver Konturabschnitt
- 32a,b: tragender Flankenabschnitt
- 34a: nicht tragender Flankenabschnitt
- 36a,b: tragender Gegenabschnitt
- 38: erster Bogenabschnitt
- 40: zweiter Bogenabschnitt
- 42: Geradenabschnitt
- 44a: nicht tragender Gegenabschnitt
- AR: Axialrichtung
- GL: Länge Geradenabschnitt
- RR: Radialrichtung
- SA: Symmetrieachse
- SK: Skelettlinie
- TG: Tangente
- UR: Umfangsrichtung

## Patentansprüche

1. Laufschaufel (10) für eine Gasturbine, insbesondere Fluggasturbine, mit
einem Schaufelabschnitt (12) und
einem Schaufelfuß (14), der mit dem Schaufelabschnitt (12) verbunden ist, wobei der Schaufelfuß (14) bezogen auf eine Querschnittsansicht eine linke und eine rechte Schaufelfußkontur (16) aufweist,
wobei die Schaufelfußkontur (16) ausgehend von einem unteren Ende (26) des Schaufelfußes (14) wenigstens zwei konvexe Konturabschnitte (28a, 28b) und wenigstens zwei konkave Konturabschnitte (30a, 30b) aufweist,
wobei ausgehend von dem unteren Ende (26) entlang der Schaufelfußkontur (16) zwischen einem konvexen Konturabschnitt (28a, 28b) und einem sich daran anschließenden konkaven Konturabschnitt (30a, 30b) ein Konturabschnitt als im Betrieb tragender Flankenabschnitt (32a, 32b) vorgesehen ist,
wobei ausgehend von dem unteren Ende (26) entlang der Schaufelfußkontur (16) zwischen einem konkaven Konturabschnitt (30a) und einem sich daran anschließenden konvexen Konturabschnitt (28b) ein Konturabschnitt als im Betrieb nicht tragender Flankenabschnitt (34a) vorgesehen ist, und
wobei wenigstens einer der konkaven Konturabschnitte (30a) einen ersten Bogenabschnitt (38), einen zweiten Bogenabschnitt (40) und einen zwischen den beiden Bogenabschnitten (38, 40) angeordneten Geradenabschnitt (42) aufweist,
**dadurch gekennzeichnet,**
**dass** der Übergang vom ersten Bogenabschnitt (38) und/oder vom zweiten Bogenabschnitt (40) zum Geradenabschnitt ein krümmungsstetiger Übergang ist.

2. Laufschaufel nach Anspruch 1, **dadurch gekennzeichnet, dass** der erste Bogenabschnitt (38) einen größeren ersten Radius (B1) aufweist als der zweite Bogenabschnitt (40).

3. Laufschaufel nach einem der vorhergehenden Ansprüche, **dadurch gekennzeichnet, dass** der Geradenabschnitt (42) eine radiale Länge (GL) bis etwa 20 Millimeter, vorzugsweise 0,1 bis 1 Millimeter aufweist.

4. Laufschaufel nach einem der vorhergehenden Ansprüche, **dadurch gekennzeichnet, dass** der auf den Geradenabschnitt (42) des betreffenden konkaven Konturabschnitts (30a) folgende, nicht tragende Flankenabschnitt (34a) geneigt ist, insbesondere in einem Winkel (α) bis 30° bezogen auf eine zur Radialrichtung (RR) und Axialrichtung (AR) orthogonalen Tangente (TG) zur Umfangsrichtung (UR).

5. Laufschaufel nach einem der vorhergehenden Ansprüche, **dadurch gekennzeichnet, dass** der Geradenabschnitt (42) ausgehend von dem unteren Ende (26) des Schaufelfußes (14) in dem ersten konkaven Konturabschnitt (30a) vorgesehen ist.

6. Laufschaufelscheibe zur Aufnahme einer Laufschaufel (10) nach einem der vorhergehenden Ansprüche, mit konkaven Scheibenkonturabschnitten, die jeweils zu einem konvexen Konturabschnitt (28a, 28b) einer Schaufelfußkontur (16) der Laufschaufel (10) komplementär sind,
wobei wenigstens einer der konkaven Scheibenkonturabschnitte einen ersten Scheibenbogenabschnitt, einen zweiten Scheibenbogenabschnitt und einen zwischen den beiden Scheibenbogenabschnitten angeordneten Scheibengeradenabschnitt aufweist,
**dadurch gekennzeichnet,**
**dass** der Übergang vom ersten Scheibenbogenabschnitt und/oder vom zweiten Scheibenbogenabschnitt zum Scheibengeradenabschnitt vorzugsweise ein krümmungsstetiger Übergang ist, und/oder
**dass** der erste Scheibenbogenabschnitt einen größeren ersten Radius aufweist als der zweite Scheibenbogenabschnitt, und/oder
**dass** der Scheibengeradenabschnitt eine radiale Länge bis etwa 20 Millimeter, vorzugsweise 0,1 bis 1 Millimeter aufweist.

7. Laufschaufelscheibe (24), insbesondere nach Anspruch 6, mit mehreren Schaufelfußaufnahmen (22), in denen eine jeweilige Laufschaufel (10) nach einem der vorhergehenden Ansprüche mit ihrem Schaufelfuß (14) aufgenommen ist.

8. Laufschaufelscheibe nach Anspruch 6 oder 7, **dadurch gekennzeichnet, dass** ein im Betrieb freier Flankenabschnitt (44a) der Schaufelfußaufnahme (22) und der in Radialrichtung (RR) oberhalb von diesem freien Flankenabschnitt (44a) angeordnete nicht tragende Flankenabschnitt (34a) des Schaufelfußes (14) einen Winkel (γ) von bis zu 20° einschließen.

9. Gasturbine, insbesondere Fluggasturbine mit einer Laufschaufelscheibe (24) nach einem der Ansprüche 7 bis 8.

## Claims

1. Rotor blade (10) for a gas turbine, in particular an aircraft gas turbine, comprising
a blade portion (12) and
a blade root (14) which is connected to the blade portion (12), the blade root (14) having, with respect to a cross-sectional view, a left-hand and a righthand blade root contour (16),
the blade root contour (16), starting from a lower end (26) of the blade root (14), having at least two convex contour portions (28a, 28b) and at least two concave contour portions (30a, 30b),
a contour portion being provided along the blade root contour (16), starting from the lower end (26), between a convex contour portion (28a, 28b) and a concave contour portion (30a, 30b) adjacent thereto, as a flank portion (32a, 32b) which is load-bearing during operation,
a contour portion being provided along the blade root contour (16), starting from the lower end (26), between a concave contour portion (30a) and a convex contour portion (28b) adjacent thereto, as a flank portion (34a) which is not load-bearing during operation, and
at least one of the concave contour portions (30a) having a first arc portion (38), a second arc portion (40) and a straight portion (42) arranged between the two arc portions (38, 40),
**characterized in that,**
the transition from the first arc portion (38) and/or from the second arc portion (40) to the straight portion is a transition which has a continuous curvature.

2. Rotor blade according to claim 1, **characterized in that** the first arc portion (38) has a greater first radius (B1) than the second arc portion (40).

3. Rotor blade according to either of the preceding claims,
**characterized in that** the straight portion (42) has a radial length (GL) of up to approximately 20 mm, preferably 0.1 to 1 mm.

4. Rotor blade according to any of the preceding claims,
**characterized in that** the non-load-bearing flank portion (34a), which follows the straight portion (42) of the relevant concave contour portion (30a), is inclined, in particular at an angle (α) of up to 30° with respect to a tangent (TG) to the circumferential direction (UR) that is orthogonal to the radial direction (RR) and the axial direction (AR).

5. Rotor blade according to any of the preceding claims,
**characterized in that** the straight portion (42), starting from the lower end (26) of the blade root (14), is provided in the first concave contour portion (30a).

6. Rotor blade disc for receiving a rotor blade (10) according to any of the preceding claims, comprising concave disc contour portions, each of which are complementary to a convex contour portion (28a, 28b) of a blade root contour (16) of the rotor blade (10),
at least one of the concave disc contour portions having a first disc arc portion, a second disc arc portion, and a disc straight portion arranged between the two disc arc portions,
**characterized in that**
the transition from the first disc arc portion and/or from the second disc arc portion to the disc straight portion is preferably a transition which has a continuous curvature, and/or
**in that** the first disc arc portion has a larger first radius than the second disc arc portion, and/or
**in that** the disc straight portion has a radial length of up to approximately 20 mm, preferably 0.1 to 1 mm.

7. Rotor blade disc (24), in particular according to claim 6, comprising a plurality of blade root receptacles (22) in which a corresponding rotor blade (10) according to any of the preceding claims is received via its blade root (14).

8. Rotor blade disc according to claim 6 or claim 7, **characterized in that** a flank portion (44a) of the blade root receptacle (22) that is free during operation, and the non-load-bearing flank portion (34a) of the blade root (14), which is arranged above said free flank portion (44a) in the radial direction (RR), enclose an angle (γ) of up to 20°.

9. Gas turbine, in particular an aircraft gas turbine, comprising a rotor blade disc (24) according to either of claims 7 to 8.

## Revendications

1. Aube mobile (10) pour une turbine à gaz, en particulier une turbine à gaz d'aéronef, comportant
une section d'aube (12) et
un pied d'aube (14) qui est relié à la section d'aube (12), dans laquelle le pied d'aube (14) présente un contour de pied d'aube (16) gauche et un contour de pied d'aube droit par rapport à une vue en coupe transversale,
dans laquelle le contour de pied d'aube (16) présente, en partant d'une extrémité inférieure (26) du pied d'aube (14), au moins deux sections de contour convexes (28a, 28b) et au moins deux sections de contour concaves (30a, 30b),
dans laquelle, en partant de l'extrémité inférieure (26) le long du contour de pied d'aube (16), entre une section de contour convexe (28a, 28b) et une section de contour concave (30a, 30b) adjacente à celle-ci, une section de contour est prévue comme section de flanc (32a, 32b) assurant un support pendant le fonctionnement,
dans laquelle, en partant de l'extrémité inférieure (26) le long du contour de pied d'aube (16), entre une section de contour concave (30a) et une section de contour convexe (28b) adjacente à celle-ci, une section de contour est prévue comme section de flanc (34a) n'assurant pas de support pendant le fonctionnement, et
dans laquelle au moins l'une des sections de contour concaves (30a) présente une première section d'arc (38), une seconde section d'arc (40) et une section rectiligne (42) disposée entre les deux sections d'arc (38, 40),
**caractérisée en ce**
**que** la transition de la première section d'arc (38) et/ou de la seconde section d'arc (40) à la section rectiligne est une transition à continuité de courbure.

2. Aube mobile selon la revendication 1, **caractérisée en ce que** la première section d'arc (38) présente un premier rayon (B1) supérieur à celui de la seconde section d'arc (40).

3. Aube mobile selon l'une des revendications précédentes,
**caractérisée en ce que** la section rectiligne (42) présente une longueur radiale (GL) allant jusqu'à environ 20 millimètres, de préférence de 0,1 à 1 millimètre.

4. Aube mobile selon l'une des revendications précédentes,
**caractérisée en ce que** la section de flanc (34a) qui n'assure pas de support et qui suit la section rectiligne (42) de la section de contour concave (30a) concernée est inclinée, en particulier à un angle (α) allant jusqu'à 30°, par rapport à une tangente (TG), orthogonale à la direction radiale (RR) et à la direction axiale (AR), par rapport à la direction circonférentielle (UR).

5. Aube mobile selon l'une des revendications précédentes,
**caractérisée en ce que** la section rectiligne (42) est prévue dans la première section de contour concave (30a) en partant de l'extrémité inférieure (26) du pied d'aube (14).

6. Disque à aube mobile destiné à recevoir une aube mobile (10) selon l'une des revendications précédentes, comportant des sections de contour de disque concaves qui sont respectivement complémentaires d'une section de contour convexe (28a, 28b) d'un contour de pied d'aube (16) de l'aube mobile (10),
dans lequel au moins l'une des sections de contour de disque concaves présente une première section d'arc de disque, une seconde section d'arc de disque et une section rectiligne de disque disposée entre les deux sections d'arc de disque,
**caractérisé en ce**
**que** la transition de la première section d'arc de disque et/ou de la seconde section d'arc de disque à la section rectiligne de disque est de préférence une transition à continuité de courbure, et/ou
**que** la première section d'arc de disque présente un premier rayon supérieur à celui de la seconde section d'arc de disque, et/ou
**que** la section rectiligne de disque présente une longueur radiale allant jusqu'à environ 20 millimètres, de préférence de 0,1 à 1 millimètre.

7. Disque à aube mobile (24), en particulier selon la revendication 6, comportant plusieurs réceptacles de pied d'aube (22), dans lesquels une aube mobile (10) respective selon l'une des revendications précédentes est reçue avec son pied d'aube (14).

8. Disque à aube mobile selon la revendication 6 ou 7,
**caractérisé en ce qu'**une section de flanc libre (44a) pendant le fonctionnement du réceptacle de pied d'aube (22) et la section de flanc (34a) du pied d'aube (14) n'assurant pas de support et disposée au-dessus de ladite section de flanc libre (44a) dans la direction radiale (RR) forment un angle (γ) allant jusqu'à 20°.

9. Turbine à gaz, en particulier turbine à gaz d'aéronef, comportant un disque à aube mobile (24) selon l'une des revendications 7 à 8.
